# EUROPÄISCHE PATENTSCHRIFT

(11) **EP 2 141 478 B1**
(45) Veröffentlichungstag und Bekanntmachung des Hinweises auf die Patenterteilung: **24.12.2014**
(21) Anmeldenummer: 09006778.6
(22) Anmeldetag: 20.05.2009
(51) Int. Cl.: G01N 1/06

(54) **Hubeinstellung für Rotationsmikrotom**
Lift setting for rotation microtome
Réglage de levage pour microtome à rotation

(30) Priorität: 01.07.2008 DE 102008031137
(43) Veröffentlichungstag der Anmeldung: 06.01.2010
(73) Patentinhaber: Microm International GmbH, 69190 Walldorf (DE)
(72) Erfinder: Fank, Reiner, 69231 Malschenberg (DE)
(74) Vertreter: Lichti - Patentanwälte

(56) Entgegenhaltungen:
- DE-A1- 2 246 851
- DE-A1- 2 253 628
- DE-A1- 19 645 107
- DE-C1- 3 806 269
- DE-C1- 19 531 524
- DE-U1- 8 100 644

## Beschreibung

Die Erfindung betrifft ein Rotationsmikrotom mit einer Antriebsmechanik, die eine Drehbewegung in eine Hubbewegung für das Objekt umsetzt, wobei Mittel zur Einstellung der Länge der Hubbewegung vorgesehen sind.

In der Mikrotomtechnik sind zwei Haupttypen besonders verbreitet. Für die Qualität der Schnitte ist es erforderlich, daß das Messer ohne Erschütterung durch die Probe geführt wird, wobei gerade der Anschnitt besonders kritisch ist. Dieses Problem wird daher bei klassischen Schlittenmikrotomen auch gerne mit einem ziehenden Schnitt gelöst, bei dem das Messer nicht völlig senkrecht zur Bewegungsrichtung des Messerschlittens angeordnet ist. Die Qualität der Schnitte entscheidet über ihre prinzipielle Brauchbarkeit, da bereits geringe Gewebematerialbeeinträchtigungen (Faltung, Dehnung, Reißen) eine sichere Beurteilung verhindern.

Klassische Schlittenmikrotome zeichnen sich durch ihre einfache Konstruktion (horizontal geführter Messerschlitten fährt über Objektträger) und einen daraus resultierenden niedrigen Preis aus. Sie erlauben eine größere Flexibilität im Messerklingeneinsatz, da das Messer aufgrund seiner nur einseitigen Einspannung über seine gesamte Breite genutzt werden kann, wie dies für ziehende Schnitte von Vorteil ist. Bei entsprechender Erfahrung des Bedienpersonals können mit diesem Mikrotomtyp genauso hochwertige Schnitte angefertigt werden wie mit Rotationsmikrotomen.

Für den Einsatz in größerem Rahmen, insbesondere für Serienschnitte, werden üblicherweise Rotationsmikrotome vorgezogen, da man mit diesen sehr viel schneller arbeiten kann. Bekannte Rotationsmikrotome, wie beispielsweise die HM 340 E des Anmelders, weisen einen auf einer Grundplatte (üblicherweise horizontal) angeordneten Messerträger und senkrecht dazu angeordnet, also üblicherweise vertikal, einen geführten Objektschlitten auf. Dieser wird mit einer Antriebsmechanik betätigt, die eine Drehbewegung in eine Linearbewegung umsetzt, beispielsweise mit einer Kurbel, die in eine Kulissensteinführung eingreift. Diese kann entweder manuell oder auch motorisch angetrieben sein kann. Für den Ausgleich der Unwucht können Gewichte vorgesehen sein, die das Gewicht des Schlittens bei der Abwärtsbewegung kompensieren. Die größere Arbeitsgeschwindigkeit dieses Mikrotomtyps ergibt sich im wesentlichen daraus, daß es im Verhältnis zum Schlittenmikrotom einen viel geringeren Hub aufweist und somit eine kürzere Schneidfrequenz erreichen kann.

Ein weiterer Vorteil der Rotationsmikrotome besteht darin, daß die Schnittqualität deutlich weniger vom Können des Bedieners abhängt, denn die Schneidbewegung des Rotationsmikrotoms ist durch die einseitige Antriebsrichtung des Kurbelantrieb gegenüber der wechselseitigen Betätigung des Schlittenmikrotoms sehr viel gleichmäßiger durchzuführen, ohne daß es einer besonderen Übung bedarf. Für die Optimierung von Schneidgeschwindigkeit und Schneidpräzision ist ein entsprechendes Größenverhältnis zwischen Hub und Probengröße erforderlich. Unnötige Verfahrwege kosten Zeit und bergen das Risiko, daß der Schlitten in Schwingung gerät, was zu Qualitätseinbußen der erzeugten Schnitte (Falten, Dehnung, Risse) führen kann.

Die zu schneidenden Proben werden üblicherweise in Kassetten mit Standardgrößen in geeigneten Materialien zum Schneiden eingebettet. Die erforderliche Größe der Kassette ergibt sich aus der Größe des Materials und liegt in der Regel im mm-Bereich bis knapp unter dem cm-Bereich.

Daraus ergibt sich, daß die Herstellung von Rotationsmikrotomen für einen bestimmten Probengrößenbereich optimiert werden muß. Dies hat den Nachteil, daß in Laboren, in denen Proben verschiedener Größenkategorien geschnitten werden sollen, möglicherweise mehrere Mikrotome für die jeweils benötigen Größenkategorien benötigt werden, oder Schnitte in bestimmten Größenkategorien suboptimal angefertigt werden müssen, weil sie entweder Einbußen in der Schnittqualität aufweisen oder wieder relativ zeitaufwendig durch einen unnötig großen Hub hergestellt werden müssen.

Aus der DE 2 253 628 A ist ein Rotationsmikrotom der eingangs genannten Art bekannt, das einen Schwinghebelantrieb aufweist. Bei diesem Mikrotom wird das Objekt am Ende des als Schwinghebel ausgebildeten Präparatträgerarmes getragen, der mit einer am anderen Ende befindlichen Achse gelagert ist, so daß das Objekt für den Schnitt auf einer Kreisbogenbahn auf und ab bewegt werden kann. Der Antrieb erfolgt über weitere Hebel, angetrieben durch einen rotierenden Exzenter. Dessen Exzentrizität kann mittels zweier ineinanderliegenden und relativ zueinander verdrehbaren Exzenterscheiben eingestellt werden, wodurch sich der Hub verändert.

Die DE 2 246 851 A lehrt ebenfalls ein Mikrotom mit Schwinghebelantrieb, wobei der Schwinghebel über einen Kurbeltrieb oder ebenfalls über einen rotierenden Exzenter erfolgen kann. Dabei wird die Hubbewegung vom Schwinghebel auf das Objekt durch einen am Schwinghebel angelenkten Übertragungshebel übertragen, was jedoch nicht konkret offenbart ist. Die Hubeinstellung erfolgt durch Änderung der wirksamen Hebellänge des Schwinghebels. Dabei wird entweder die Lagerung des Übertragungshebels auf dem Schwinghebel verschoben oder es wird der Drehmittelpunkt des Schwinghebels selbst auf diesem verschoben.

Die DE 195 31 524 C1 und DE 81 00 644 U1 lehren ebenfalls Mikrotome mit Schwinghebelantrieben, die eine Drehbewegung in eine Hubbewebung für ein Objekt umsetzen. DE 196 45 107 A1 lehrt ein Mikrotom mit einem Schwinghebelantrieb, der eine Drehbewegung in eine Hubbewebung für ein Messer umsetzt.

Rotationsmikrotome mit solchen Schwinghebelantrieben haben sich jedoch nicht durchgesetzt. Die heutigen Rotationsmikrotome weisen in der Regel mittels einer Vertikalführung geführte Objektschlitten auf, die mittels eines Kurbelantriebs angetrieben werden, der unmittelbar den Objektschlittenhub bewirkt.

Aus DE 38 06 269 C1 ist ein Rotationsmikrotom bekannt mit einer Antriebseinrichtung, die eine Drehbewegung in eine Hubbewegung für das Objekt umsetzt, wobei sich das Objekt auf einer Objekthalteeinrichtung befindet, die in einer linearen Lagereinrichtung vertikal geführt ist, und die Antriebseinrichtung die Drehbewegung in eine Linearbewegung für den Hub der Objekthalteeinrichtung umsetzt, indem sie einen Exzenterantrieb mit einem Exzenterhebel, einen Stift, eine Welle und eine Rolle in einem Schlitz in der Objekthalteeinrichtung aufweist.

Auf diese sind jedoch die oben genannten Vorschläge zur Einstellung der Länge der Hubbewegungen bei Schwinghebelantrieben nicht übertragbar.

Aufgabe der Erfindung ist daher, ein Rotationsmikrotom der vorgenannten Art mit Mitteln zur Einstellung der Länge der Hubbewegung auszustatten, damit es für den Einsatz mit Proben unterschiedlicher Größenkategorien verwendet werden kann.

Dies wird bei einem Rotationsmikrotom der eingangs genannten Art dadurch erreicht, daß sich das Objekt auf einem Objektschlitten befindet, der in einer Objektschlittenführung vertikal geführt ist, daß die Antriebsmechanik die Drehbewegung in eine Linearbewegung für den Hub des Objektschlittens umsetzt, indem sie einen Kurbelantrieb mit einer Kurbel, einem Kurbelzapfen, eine Kurbelwelle und einem Kurbelzapfeneingriff in einer Führung im Objektschlitten aufweist, und daß die Mittel als Einstellmöglichkeit der Entfernung des Kurbelzapfens von der Mittellinie der Kurbelwelle ausgebildet sind.

Dies hat den Vorteil einer einfachen Ausgestaltung bei dieser Mechanik, insbesondere der Verstellung des Hubs ohne Montagearbeiten.

Alternative Ausgestaltungen sehen vor, die Einstellmöglichkeit entweder stufenweise oder stufenlos auszugestalten. Die stufenweise Einstellmöglichkeit hat den Vorteil der einfacheren Umsetzung und sicheren Bedienung, während die stufenlose Einstellmöglichkeit den Vorteil der flexibleren Einstellbarkeit auch für Sondergrößen oder sonstige Sonderanforderungen hat.

Eine vorteilhafte Weiterbildung für die Einstellmöglichkeit sieht vor, daß die Hubeinstellmittel eine in der Kurbel verstellbar angeordnete Verstellbasis für den Kurbelzapfen und Betätigungsmittel für diese aufweisen. Eine solche Verstellbasis könnte verschieb- oder drehbar angeordnet sein.

Eine sinnvolle Ausgestaltung sieht vor, daß die Betätigungsmittel in einer Eingriffsmöglichkeit auf der Verstellbasis bestehen, die auf der dem Kurbelzapfen gegenüberliegenden Seite angeordnet ist, und einem Verstellwerkzeug zum Eingriff in diese. Dies hat den Vorteil, daß dadurch eine Einstellbarkeit des Kurbelzapfens mittels eines Werkzeugs von außerhalb des Kurbelwellengehäuses möglich ist.

Eine zweckmäßige Ausgestaltung der Verstellbarkeit sieht vor, daß diese als Rotationsbewegung ausgebildet ist und der Kurbelzapfen auf der Verstellbasis exzentrisch angeordnet ist. Dies hat den Vorteil, daß die Verstellung des Hubs durch einfache Drehbewegung der Verstellbasis bewirkt werden kann, so daß dies durch Einführung eines Werkzeuges durch eine Gehäuseöffnung möglich ist.

Eine sinnvolle Weiterbildung der Verstellbasis sieht vor, diese mit einem Konus und die Kurbel mit einer korrespondierenden Aufnahme auszubilden. Dies hat den Vorteil, daß damit eine Spielfreiheit erreicht werden kann. Am zweckmäßigsten ist die Konizität mit 5-6° größer als die Selbsthemmung, um eine möglichst optimale Spielfreiheit zu erzielen. Eine Weiterbildung der Verstellbasis sieht vor, daß diese eine Ringnut aufweist und daß an der Kurbel befestigbare Blattfedern zum Eingriff in diese Ringnut angeordnet sind. Dies hat den Vorteil, daß die Verstellbasis durch den Federdruck spielfrei gehalten wird, insbesondere in den Aufnahmekonus der Kurbel gedrückt wird.

Eine Weiterbildung mit stufenweiser Einstellbarkeit sieht vor, daß die Ringnut eine oder mehrere Rastkerben aufweist und die Blattfedern mit einer Rastnase ausgestaltet sind, wobei die Blattfedern auf der Kurbel so angeordnet sind, daß die Rasteingriffe definierten Hubeinstellungen entsprechen. Dies hat den Vorteil, daß die Hubverstellung mit sicherer Zuordnung und präzise für verschiedene Objektgrößen vorgenommen werden kann.

Eine sinnvolle Ausgestaltung der vorgenannten Weiterbildung sieht vor, daß zwei Rastkerben in 180°-Position zueinander und zwei Blattfedern mit ihren Rastnasen zum Eingriff in diese angeordnet sind. Diese erlaubt eine zweistufige Verstellbarkeit der Hubeinstellung.

Eine alternative Ausgestaltung einer stufenlosen Einstellmöglichkeit und der Mittel hierfür sieht vor, daß die Verstellbasis als Schneckenrad ausgebildet ist, auf dem der Kurbelzapfen exzentrisch angeordnet ist, und daß als Betätigungsmittel die Eingriffsmöglichkeit für ein Verstellwerkzeug in einer mit dem Schneckenrad zusammenwirkenden Schnecke vorgesehen ist. Dies hat den Vorteil, daß eine Selbsthemmung der Mittel gegeben ist, die unmittelbar eine stufenlose Einstellbarkeit ermöglicht, die keiner Arretierung bedarf.

Für alle vorgenannten Ausgestaltungen sind zweckmäßigerweise Mittel zur Festlegung und Freigabe der Kurbelwelle vorzusehen, mittels derer die Kurbelwelle bzw. die Kurbel so arretiert werden kann, daß das Verstellwerkzeug mit der Eingriffsmöglichkeit auf der Verstellbasis oder auf der Schnecke in Eingriff kommen kann, wobei der Eingriff lösbar ausgestaltet ist. Dies erlaubt eine leichte und sichere Bedienbarkeit, indem einerseits ein sicheres Auffinden der Eingriffsposition zur Vornahme der Verstellung gegeben ist, insbesondere, wenn ein Verstellwerkzeug durch eine Öffnung des Mikrotomgehäuses hindurchgeführt werden soll, und andererseits durch die Blockierung der Kurbelwelle eine sichere Vornahme der Einstellung ermöglich wird.

Eine vorteilhafte Ausgestaltung sieht hierfür einen Arretierstab vor, der durch eine Durchbrechung im Kurbelwellengehäuse zur Kurbelwelle führbar ist, um diese festzulegen und eine Eingriffsöffnung für den Arretierstab in der Kurbelwelle, in die der Arretierstab eingreifen kann, wenn sich die Kurbelwelle in der Position für den Eingriff des Verstellwerkzeugs befindet. Dies hat den Vorteil, daß eine Arretierung der Kurbelwelle in der vorgegebenen Position auf einfache Weise von außen bewirkt werden kann.

Eine vorteilhafte Weiterbildung des Arretierstabs sieht vor, die Anordnung eines Positionsstifts seitlich auf dem Arretierstab, eine verschiebbar und drehbare Lagerung des Arretierstabs in einer als Bohrung ausgestalteten Durchbrechung, eine Ausnehmung für den Positionsstift im Rand der Bohrung, wobei der Rand den Arretierstab mittels des Positionsstifts in der Freigabeposition hält und beim Eingriff des Positionsstifts in die Ausnehmung der Arretierstab in die Eingriffsöffnung schiebbar ist, eine ringförmige Auskragung auf dem Arretierstab und eine den Arretierstab umgebende Feder, die so angeordnet ist, daß die Kraft der Feder auf die Auskragung des Arretierstabs wirkt und diesen damit in die Eingriffsöffnung der Kurbelwelle einrückt. Dies hat den Vorteil, daß der Arretierstab dauerhaft am Gerät verbleiben kann und trotzdem eine unbeabsichtigte Arretierung auf sichere Weise verhindert werden kann, in dem eine Arretierung nur dann möglich ist, wenn der Arretierstab zuvor in Arretierposition verbracht wurde. Beim Einsatz des Arretierstabs, also wenn sich der Positionierstift in der Ausnehmung befindet, bewirkt die Feder, daß der Arretierstab bei Drehung der Kurbelwelle in der richtigen Position durch die Federkraft selbsttätig einrückt.

Eine vorteilhafte Ausgestaltung sieht Kompensationsmittel zum Ausgleich der Unwucht der Antriebsmechanik vor. Dies bewirkt einen gleichförmigen Lauf der Antriebsmechanik.

Diese Mittel können beispielsweise im Antriebsrad vorgesehen sein.

Eine zweckmäßige Weiterbildung sieht vor, diese Mittel verstellbar auszugestalten, um auf den jeweils eingestellten Hub anpaßbar zu sein.

Eine mögliche Ausgestaltung der verstellbaren Kompensationsmittel sieht vor, daß sie als erstes verstellbares Kompensationsgewicht kombiniert mit einem zweiten, fest angeordneten Kompensationsgewicht ausgestaltet sind. Dadurch muß bei der Verstellung nur ein Teil der Masse bewegt werden.

Eine mögliche Ausgestaltung sieht vor, die Verstellbarkeit durch Mittel zur radialen Positionsänderung des verstellbaren Kompensationsgewichts im Verhältnis zur Kurbelwelle auszubilden. Dies hat den Vorteil, daß die Verstellbarkeit auf einfache Weise sowohl stufenweise, zum Beispiel mit Rasten, als auch stufenlos realisierbar ist.

Eine sinnvolle Ausgestaltung der Kompensationsmittel sieht vor, daß das erste Kompensationsgewicht fest im Antriebsrad angeordnet ist und das zweite Kompensationsgewicht entfernbar im Antriebsrad angeordnet ist. Dies hat den Vorteil, daß eine Zuordnung zu bestimmten Hüben vorgegeben ist und damit eine Justage entfällt, wobei jedoch nur ein Teil des Gewichts bewegt werden muß.

Es kann vorgesehen sein, daß die Entfernbarkeit des zweiten Kompensationsgewichts dadurch erzielbar ist, daß es aus einer Wirkposition im Antriebsrad in eine Ruheposition im Mikrotomgehäuse verschiebbar und von dieser in die Wirkposition zurückholbar ausgestaltet ist. Dies hat den Vorteil, daß das Kompensationsgewicht auf einfache Weise zwischen einer Ruhe- und einer Einsatzposition hin- und herbewegt werden kann.

Eine Ausgestaltung des zweiten Kompensationsgewichts kann derart sein, daß es mindestens zwei durchgehende Öffnungen für je einen Haltestift im Antriebsrad aufweist und eine Öffnung für eine Schubstange, mittels derer das zweite Kompensationsgewicht aus der Wirkposition in die Ruheposition verschoben werden kann. Dies hat den Vorteil einer einfachen Handhabung durch den Benutzer.

Weiterhin kann vorgesehen sein, daß die Ruheposition durch zwei korrespondierende Haltestifte innerhalb des Mikrotomgehäuses gebildet ist, und zwar derart, daß das Verschieben des zweiten Kompensationsgewichts von den Haltestiften in der Wirkposition auf die Haltestifte in der Ruheposition gleitend erfolgen kann. Dies fördert die leichte Handhabung durch den Benutzer.

Zweckmäßigerweise wird das zweite Kompensationsgewicht in seiner Wirkposition im Antriebsrad durch eine Rastvorrichtung gehalten. Dies hat den Vorteil, daß eine Lageveränderung des verstellbaren Kompensationsgewichts sicher vermieden werden kann.

Die Rastvorrichtung kann beispielsweise derart ausgebildet sein, daß das zweite Kompensationsgewicht im Verlauf mindestens einer Haltestiftöffnung mindestens ein Kugeldruckstück, bestehend aus Kugel und Feder, aufweist und der Haltestift im Antriebsrad mit einer Ringnut ausgestattet ist, in die die Kugel in der gewünschten Endlage der Wirkposition eingreift.

Eine Ausgestaltung sieht vor, daß die Eingriffsöffnung für die Schubstange und die Schubstange korrespondierende Mittel aufweisen, mittels derer die Schubstange im verstellbaren Kompensationsgewicht fixiert werden kann. Dies hat den Vorteil einer sicheren und kontrollierten Bedienung des verstellbaren Kompensationsgewichts, insbesondere beim Zurückziehen des Gewichts aus dem Mikrotomgehäuse mittels eines Werkzeugs von außen in das Antriebsrad.

Beispielsweise kann vorgesehen sein, daß die Mittel aus Gewinden bestehen, die in der Eingriffsöffnung für die Schubstange und am vorderen Ende der Schubstange angeordnet sind, so daß sich die Schubstange für das Zurückziehen des Kompensationsgewichts in dieses einschrauben läßt.

Die Erfindung wird anhand von in der Zeichnung dargestellten Ausführungsbeispielen erläutert, wobei auf alternative Ausgestaltungsmöglichkeiten hingewiesen wird. Es zeigen
- Fig. 1: eine Prinzipskizze eines bekannten Rotationsmikrotoms
- Fig. 2: eine schematische Darstellung des Objektschlittenantriebes mit einer erfindungsgemäßen Ausgestaltung
- Fig. 2a: die Kulissenführung des Objektsschlittens im Detail
- Fig. 2b: eine schematische Darstellung der Kurbel mit erfindungsgemäßer Ausgestaltung für eine Verstellbarkeit
- Fig. 3: eine Kurbel mit einer drehbaren Verstellbasis
- Fig. 4: eine Kurbel gem. Fig. 3 mit Verstellbasis im Querschnitt
- Fig. 4a: eine Blattfeder als Detail zu Fig. 4
- Fig. 4b: das Funktionsprinzip der Raste mit Blattfeder und Verstellbasis aus Fig. 4 im Detail
- Fig. 5: eine schematische Darstellung des Funktionsprinzips des Eingriffs des Verstellwerkzeugs an der Verstellbasis sowie des Eingriffs eines Arretierstabs in die Kurbelwelle zu deren Festlegung
- Fig. 6: eine konkrete Ausgestaltung des Arretierstabs
- Fig. 6a: ein Detail der Fig. 6 mit Positionierstifteingriff
- Fig. 7: eine schematische Darstellung des Funktionsprinzips eines zweiteiligen Kompensationsgewichts
- Fig. 7a: eine Rastsicherung als Detail zu Fig. 7
- Fig. 8: eine schematische Darstellung der Ausgestaltung einer stufenlosen Verstellbarkeit des Hubs
- Fig. 8a: ein stufenlos verstellbares Kompensationsgewicht

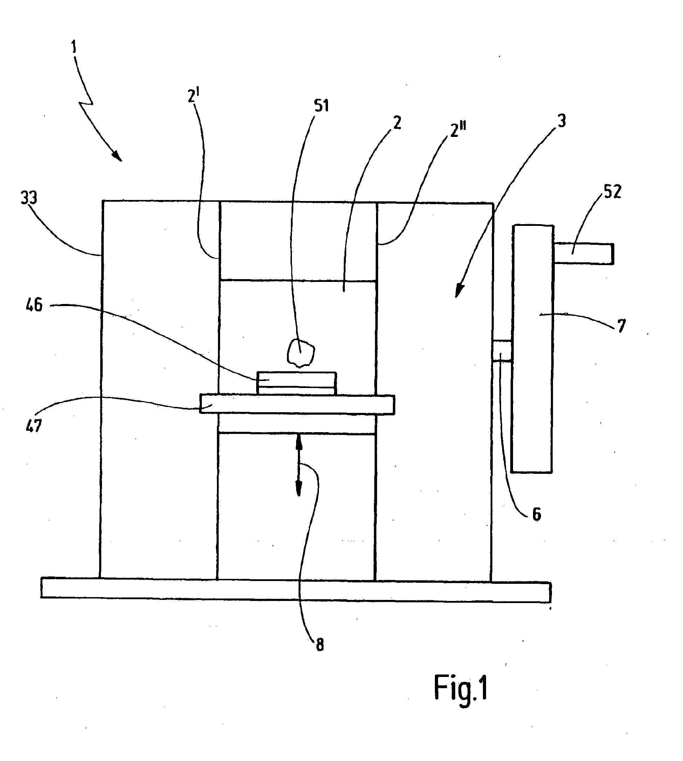

**Fig. 1** zeigt eine Prinzipskizze eines bekannten Rotationsmikrotoms 1. Bei einem solchen befindet sich in einem Mikrotomgehäuse 33 ein Objektschlitten 2, welcher mittels einer Objektschlittenführung 2', 2" vertikal geführt ist. Der Objektschlitten 2 wirkt dabei mit einem Messer 46, das mit einer Messerhalterung 47 gehalten ist, derart zusammen, daß das auf dem Objektschlitten 2 angeordnete Objekt 51 geschnitten wird. Dazu vollzieht der Objektschlitten 2 eine Auf- und Ab- Bewegung, die durch den Doppelpfeil 8 angedeutet ist. Zur Erzeugung dieses Hubs 8 dient ein Antrieb, welcher beispielsweise mittels eines Antriebsrads 7 und einer Handkurbel 52 erfolgen kann. Der Hub 8, der als Schnittbewegung durchfahren wird, erfordert eine entsprechende Antriebsmechanik, die in der Regel als Kurbelantrieb 3 ausgebildet ist, von dem hier jedoch lediglich die Kurbelwelle 6 sichtbar ist.

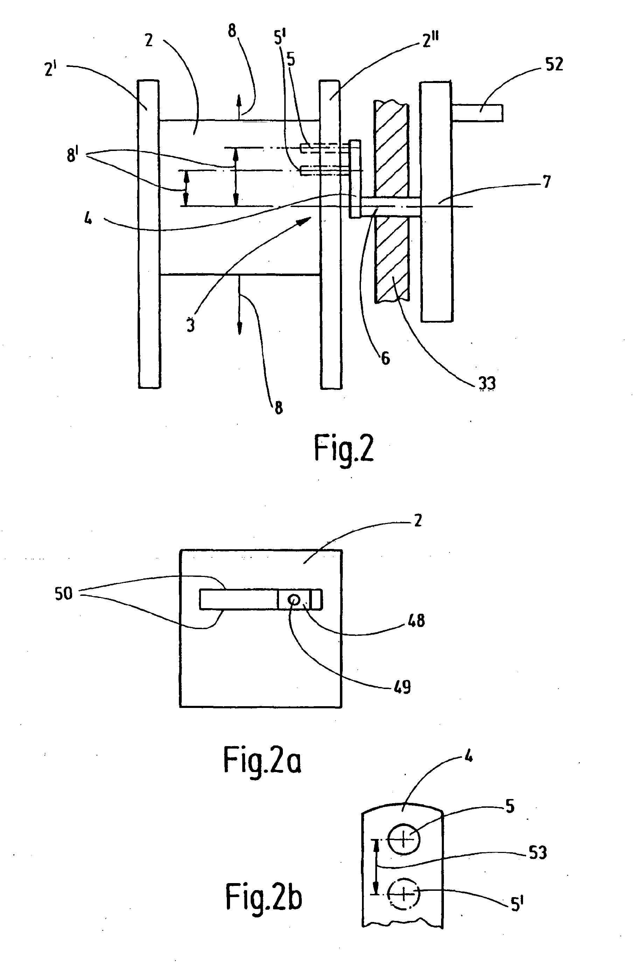

**Fig. 2** zeigt eine schematische Darstellung des Objektschlittenantriebs mit der erfindungsgemäßen Weiterentwicklung. Das Wesen der Erfindung besteht darin, daß der Kurbelantrieb 3 derart ausgebildet ist, daß Mittel vorgesehen sind, durch die sich die Länge der Linearbewegung des Hubs 8 einstellen läßt. Bei einem Kurbelantrieb 3 kann dies dadurch erfolgen, daß der Kurbelzapfen 5, 5' auf einer Kurbel 4 bezüglich seiner radialen Entfernung von der Kurbelwelle 6 einstellbar ist. Dies ist hier dadurch angedeutet, daß der Kurbelzapfen eine äußere Position 5 oder eine weiter innen liegende Position 5' einnehmen kann. Entsprechend dieser Positionsveränderung des Kurbelzapfens 5, 5' verändert sich in entsprechender Weise der durch den Doppelpfeil 8 angedeutete Hub, wobei der Hub 8 der doppelten Strecke der Entfernung des Kurbelzapfens 5 oder 5' von der Mittellinie der Kurbelwelle 6 entspricht. Dies ist mittels Doppelpfeilen als halbe Hübe 8' eingezeichnet. Selbstverständlich kann der Kurbelzapfen 5 auch in viele Positionen oder kontinuierlich verstellbar ausgestaltet sein.

In dieser wie in allen folgenden Darstellungen zeigen gleiche Bezugszeichen funktionsgleiche Elemente und werden daher nicht zu jeder Figur immer beschrieben.

**Fig. 2a** zeigt eine Kulissenführung 50 des Objektschlittens 2. Diese Kulissenführung 50 dient dazu, die Rotationsbewegung des Kurbelzapfens 5, 5' dem Objektschlitten 2 zu vermitteln, wobei diese Rotationsbewegung in die genannte Vertikalbewegung umgesetzt wird. Dies erfolgt mittels des in der Kulissensteinführung 50 verschiebbaren Kulissensteins 48, der einen Kurbelzapfeneingriff 49 aufweist, in den der Kurbelzapfen 5 gemäß der Fig. 2 eingreift. Dies ist selbstverständlich nur ein Beispiel einer Umsetzung einer Rotationsbewegung in eine Geradführung, weitere Möglichkeiten, wie Langlochführungen usw. sind bekannt.

**Fig. 2b** zeigt eine schematische Darstellung der Kurbel 4 mit der erfindungsgemäßen Ausgestaltung für eine Verstellbarkeit des Kurbelzapfens 5, 5'. Dabei zeigt der Doppelpfeil 53 die Verstellung des Kurbelzapfens 5 in eine andere Position, wie die Position 5'. Eine solche Verstellung könnte beispielsweise mit einer Kulissensteinführung vorgenommen werden, wobei eine Spindelverstellung des Kulissensteins denkbar wäre. Eine weitere Möglichkeit ist eine drehbare Verstellbasis, die im folgenden näher erläutert wird.

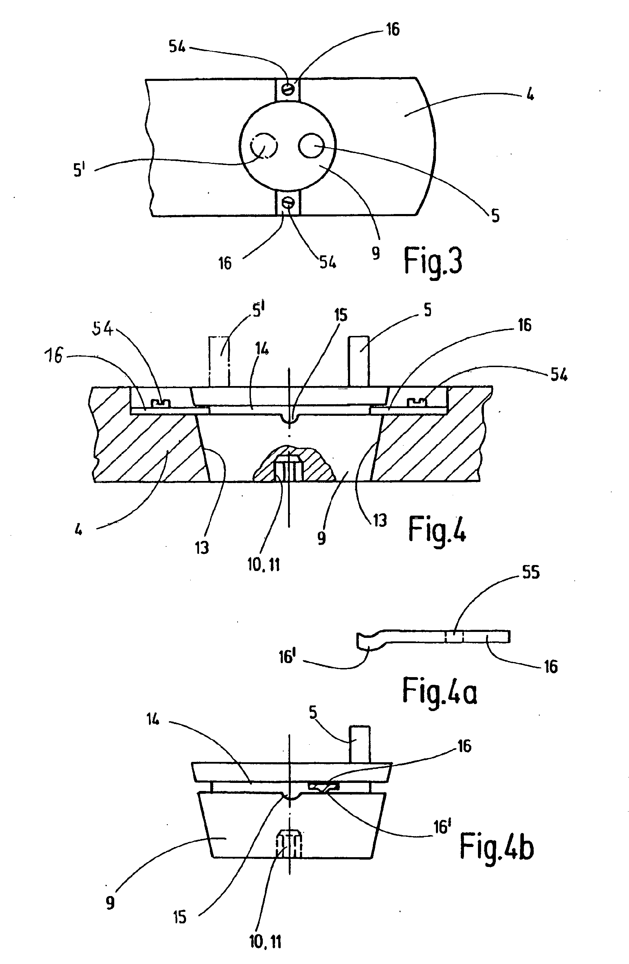

Ein Beispiel einer solchen solche Kurbel 4 mit einer drehbaren Verstellbasis 9 zeigt die **Fig. 3****.** Dabei ist die drehbare Verstellbasis 9 in die Kurbel 4 eingelassen und wird dort möglichst spielfrei gehalten. Dazu sind hier Blattfedern 16 vorgesehen, welche in eine Ringnut 14 der Verstellbasis 9 eingreifen. Die Blattfedern 16 sind mittels Schrauben 54 befestigt. Je nach Drehung der Verstellbasis 9 kann der Kurbelzapfen 5 die ausgezeichnete Position oder die strichpunktierte Position 5' oder eine dazwischen liegende Position einnehmen und entsprechend führt der Objektschlitten 2 einen Hub 8 aus.

**Fig. 4** zeigt eine Kurbel gemäß Fig. 3 mit weiteren Einzelheiten. Dabei ist zu sehen, wie die Verstellbasis 9 durch die Blattfedern 16 in eine konische Ausgestaltung 13 mittels der Federkraft hineingedrückt wird. Diese konische Ausgestaltung 13 weist sowohl die Verstellbasis 9 als auch korrespondierend deren Lager in der Kurbel 4 auf. Auf diese Weise ist die Verstellbasis 9 in der Kurbel 4 spielfrei gelagert. Diese Spielfreiheit ist um so besser, je steiler die korrespondierenden Kegelflächen sind, dabei muß natürlich der Winkel entsprechend den Materialien so gewählt sein, daß keine Selbsthemmung eintritt.

Dargestellt ist noch eine Rastkerbe 15, wobei hier entsprechend der um 180° versetzten Blattfedern 16 auch diese Rastkerben 15 um 180° versetzt sind, so daß die Rastnasen 16' (siehe Fig. 4a und b) der beiden Blattfedern 16 in der entsprechenden Stellung der Verstellbasis 9 jeweils in die Rastkerben 15 eingreifen. Auf diese Weise rastet die Verstellbasis 9 jede halbe Umdrehung ein, so daß die beiden Positionen 5 und 5' des Kurbelzapfens 5, 5' erzielbar sind. Bei einer derartigen Ausgestaltung sind somit zwei verschiedene Hübe 8 einstellbar. Alternativ lassen sich natürlich mehrere Positionen einstellen oder es ist auch eine kontinuierliche Einstellung möglich, wenn die Verstellbasis 9 auf andere Weise in ihre Einstellung arretiert wird, beispielsweise durch eine Vorrichtung, die sie in den Konus 13 der Kurbel 4 hineindrückt. Der Stellbewegung selbst dient ein Betätigungsmittel 10, das hier als Eingriffsmöglichkeit 11 für ein Verstellwerkzeug 12 ausgebildet ist. Dies ist weiter unten beschrieben.

**Fig. 4a** zeigt eine Blattfeder 16 im Detail, dabei ist die Rastnase 16' als Abkröpfung sichtbar, sowie eine Bohrung 55 für die Befestigung mit einer Schraube 54.

**Fig. 4b** zeigt noch das bereits angesprochene Funktionsprinzip der Verrastung der Verstellbasis 9, wobei zu sehen ist, wie das vordere Ende der Blattfeder 16 mit der Rastnase 16' in der Ringnut 14 läuft, bis es zum Eingriff der Rastnase 16' in die Rastkerbe 15 kommt, wobei dies auf der Rückseite ebenso stattfindet.

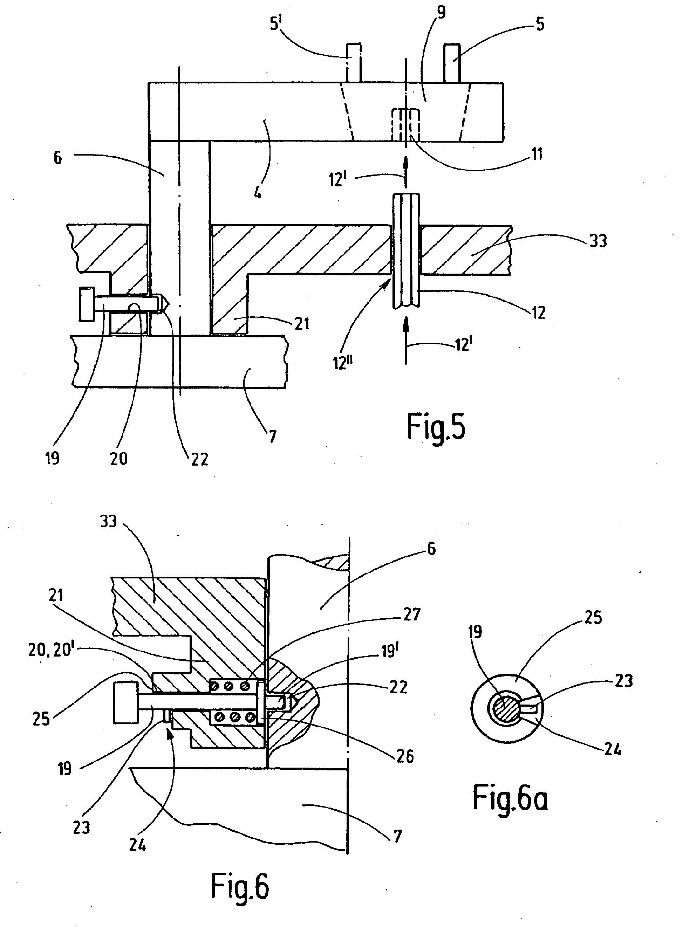

**Fig. 5** zeigt eine schematische Darstellung des Funktionsprinzips des Eingriffs 11 des Verstellwerkzeugs 12 an der Verstellbasis 9 sowie des Eingriffs eines Arretierstabes 19 in die Kurbelwelle 6 zu deren Festlegung für den vorgenannten Eingriff des Verstellwerkzeugs 12.

Diese Funktion ist folgende: Bevor der Arretierstab 19 in die Eingriffsöffnung 22 der Kurbelwelle 6 eingreift muß die Kurbelwelle 6 mit der Kurbel 4 so lange gedreht werden, bis die Eingriffsöffnung 22 der Kurbelwelle 6 exakt mit einer Durchbrechung 20 im Kurbelwellengehäuse 21 fluchtet. Dann kann der in der Durchbrechung 20 gelagerte Arretierstab 19 in diese Eingriffsöffnung 22 geschoben werden, und die Kurbelwelle 6 mit der Kurbel 4 wird exakt in der Position arretiert, in der das Verstellwerkzeug 12 in die Eingriffsmöglichkeit 11 der Verstellbasis 9 in Richtung des Pfeils 12' eingeführt werden kann. Nun ist es möglich, die Verstellbasis 9 derart zu drehen, daß der Kurbelzapfen in die gewünschte Position 5 oder 5' kommt. Diese exakte Positionierung ist deshalb erforderlich, weil sich die Kurbel 4 im Inneren des Mikrotomgehäuses 33 befindet und für die Einführung 12' des Verstellwerkzeugs 12 die Einführöffnung 12" im Mikrotomgehäuse 33 exakt mit der Eingriffsmöglichkeit 11 der Verstellbasis 9 fluchten muß. In der Darstellung ist noch die Anordnung des Antriebsrades 7 angedeutet, mit der die Kurbelwelle 6 gedreht wird.

Damit bei einer derartigen Drehung des Antriebsrades 7 der Arretierstab 19 von selbst in die Eingriffsöffnung 22 der Kurbelwelle 6 für die Arretierung hineingleitet, kann man die in **Fig. 6 und 6a** vorgeschlagene oder eine funktionsgleiche Mechanik vorsehen. In dem vom Mikrotomgehäuse 33 auskragenden Kurbelwellengehäuse 21 befindet sich die als Bohrung 20' ausgebildete Durchbrechung 20 zur Lagerung des Arretierstabs 19. Dieser weist eine Auskragung 26 auf, welche hinter einem Eingriffszapfen 19' des Arretierstabes 19 angeordnet ist. Der Eingriffszapfen 19' dient dem Eingriff in die Eingriffsöffnung 22 der Kurbelwelle 6. Im Kurbelwellengehäuse 21 ist eine Feder 27 gelagert, die auf die Auskragung 26 wirkt und so den Eingriffszapfen 19' in Richtung der Kurbelwelle 6 drückt. Auf diese Weise ist es möglich, daß man, wenn der Eingriffszapfen 19' nicht in der Eingriffsöffnung 22 ist, die Kurbelwelle 6 mit dem Antriebsrad 7 so lange dreht, bis der Eingriffszapfen 19' mit der Eingriffsöffnung 22 fluchtet und dadurch mittels der Feder 27 in die Eingriffsöffnung 22 geschoben wird. Dann befindet sich die Kurbelwelle 6 in der oben beschriebenen Eingriffsposition für den Einsatz des Verstellwerkzeuges 12.

Um den Arretierstab 19 für den normalen Betrieb des Mikrotoms dauerhaft außer Eingriff bringen zu können, ist an dem Arretierstab 19 ein Positionsstift 23 angeordnet, der entweder auf einem Rand 25 aufstehen kann, wenn der Arretierstab 19 gegen die Kraft der Feder 27 herausgezogen und entsprechend gedreht wird. Soll dagegen der Arretierstab 19 in die vorgenannte Eingriffsposition gebracht werden, so wird er so lange gedreht, bis der Positionsstift 23 in eine Ausnehmung 24 im Rand 25 hineingleitet und dadurch die Feder 27 den Eingriffszapfen 19' in die Eingriffsöffnung 22 der Kurbelwelle 6 schieben kann, sobald sich diese durch die Drehung der Kurbelwelle 6 in der entsprechenden Position befindet. Dabei zeigt die **Fig. 6a** eine Sicht auf den Arretierstab 19 von links, wobei zur besseren Sichtbarmachung von Rand 25, Positionsstift 23 und Ausnehmung 24 der Kopf des Arretierstabes 19 abgeschnitten ist.

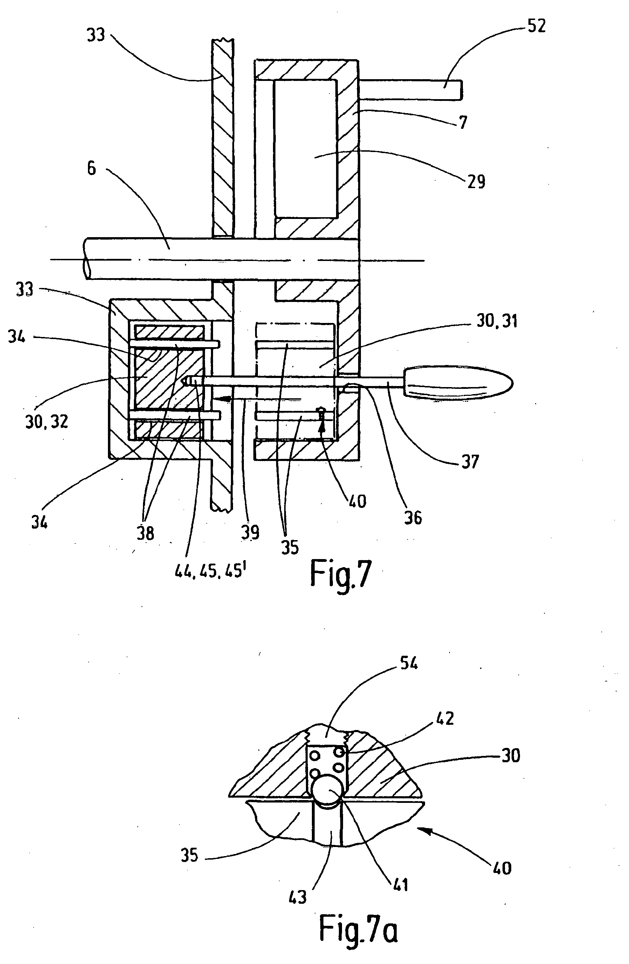

**Fig. 7** zeigt eine schematische Darstellung des Funktionsprinzips eines zweiteiligen Kompensationsgewichts 29, 30. Diese Darstellung zeigt das Antriebsrad 7 mit der Kurbelwelle 6, die in das Mikrotomgehäuse 33 eingreift. Dabei wurde zur Vereinfachung das Kurbelwellengehäuse 21 mit dem Arretierstab 19 weggelassen.

In dem Antriebsrad 7 ist wie bei den bekannten Mikrotomen mit Kurbelantrieb ein Kompensationsgewicht 29 fest angeordnet, das dazu dient, Unwuchten in der Drehbewegung zu vermeiden, welche in erster Linie daher rühren, daß der Objektschlitten 2 Auf- und Abwärtsbewegungen macht.

Wird jedoch der Hub 8 verändert, so ist auch ein anderes Kompensationsgewicht für den Ausgleich der Unwucht erforderlich. Eine Möglichkeit dazu besteht darin, daß man zu dem festen ersten Kompensationsgewicht 29 ein zweites entfernbares Kompensationsgewicht 30 anordnet, dessen Gewicht dann entsprechend der Verstellung des Hubs 8 bemessen ist. Mit einem solchen zweiten Kompensationsgewicht 30 mit einer bestimmten Masse kommt man dann aus, wenn nur zwei verschiedene Positionen des Kurbelzapfens 5, 5' eingestellt werden sollen. Dann kann man den Unterschied zwischen diesen beiden Hüben dadurch ausgleichen, daß das zweite Kompensationsgewicht 30 einmal in einer Wirkposition 31 im Antriebsrad 7 gelagert ist und einmal in eine Ruheposition 32 außerhalb des Antriebsrades 7 verbracht werden kann.

Im einfachsten Fall könnte dieses zweite Kompensationsgewicht 30 einfach aus dem Antriebsrad 7 entfernt werden. Vorzugsweise wird dieses entfernbare zweite Kompensationsgewicht 30 jedoch derart ausgestaltet, daß es von einer Wirkposition 31 im Antriebsrad 7 in eine Ruheposition 32 im Mikrotomgehäuse 33 verschoben werden kann. Dazu ist es verschiebbar gelagert und es muß eine Einrichtung zur Bewirkung dieser Verschiebung vorgesehen sein. Eine Möglichkeit besteht darin, daß eine Öffnung 36 im Antriebsrad 7 der Einführung einer Schubstange 37 dient, mit der das zweite Kompensationsgewicht 30 in eine Aufnahme des Mikrotomgehäuses 33 verschoben werden kann.

Um dies zu bewirken ist vorgesehen, daß das Kompensationsgewicht 30 zwei Öffnungen 34 als Durchgangslöcher aufweist, in die sowohl Haltestifte 35 im Antriebsrad 7 als auch korrespondierende Haltestifte 38 im Mikrotomgehäuse eingreifen können, wobei dann durch den Verschiebeweg 39 das Kompensationsgewicht 30 von den einen Haltestiften 35 oder 38 auf die anderen Haltestifte 38 oder 35 gleiten kann. Damit diese Verschiebung möglich ist, müssen die Haltestifte 35 und 38 fluchten, wenn sich das Antriebsrad 7 in der oben bereits erwähnten Arretierposition befindet.

Damit man mit der Schubstange 37 nicht nur die Verschiebung von der Wirkposition 31 in die Ruheposition 32 bewirken kann, sondern auch umgekehrt, muß eine Eingriffsöffnung 44 für die Schubstange 37 im Kompensationsgewicht 30 vorgesehen sein, mittels der das Kompensationsgewicht 30 auch von der Ruheposition 32 in die Wirkposition 31 zurückgezogen werden kann. Am zweckmäßigsten sind dazu Gewinde 45 und 45' in der Eingriffsöffnung 44 und entsprechend am Ende der Schubstange 37 vorgesehen, damit diese eingeschraubt werden kann.

Im Antriebsrad 40, beispielsweise auf einem der Haltestifte 35, kann eine Rastvorrichtung 40 vorgesehen sein, die dazu dient, daß das Kompensationsgewicht 30 sich bei der Betätigung des Antriebsrads 7 nicht aus seiner Position bewegen kann.

Eine derartige Rastvorrichtung 40 kann beispielsweise aus einer Kugel 41 bestehen, die mit einer Feder 42 mit Federkraft beaufschlagt ist und dadurch in eine Ringnut 43 des Haltestiftes 35 derart eingreift, daß sie mit einer bestimmten Kraft auch wieder ausgerastet werden kann. Um die Kugel 41 in eine entsprechende Bohrung des Kompensationsgewicht 30 einfügen zu können, die ja am vorderen Ende derart verengt sein muß daß die Kugel 41 überstehend gehalten ist, ist zweckmäßigerweise eine Schraube 54 vorgesehen, die die Feder 42 gegen die Kugel 41 drückt, so daß diese den Überstand für die Einrastung hat.

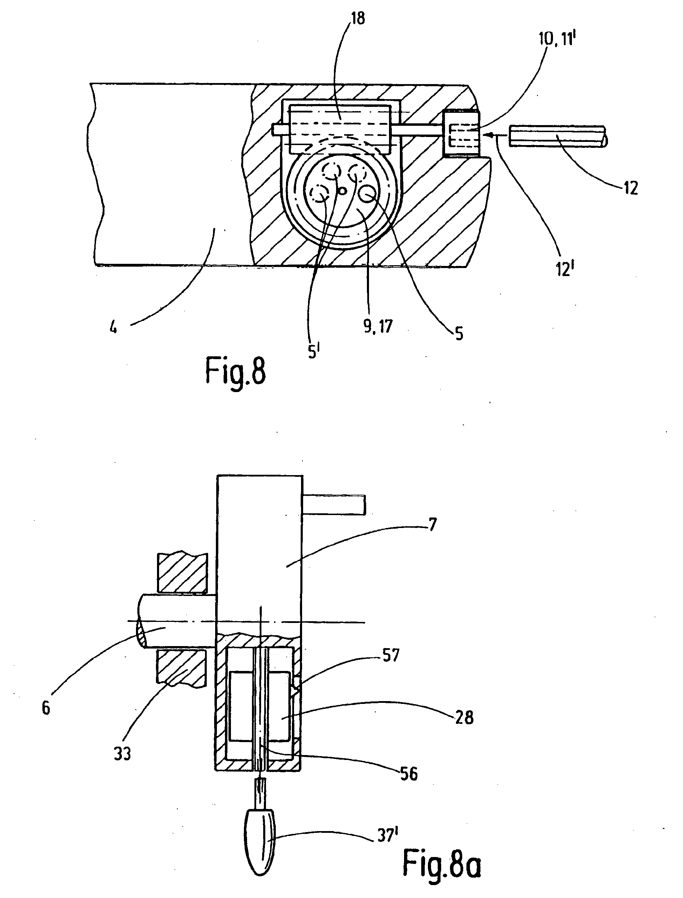

**Fig. 8** zeigt eine schematische Darstellung einer Ausgestaltung einer stufenlosen Verstellbarkeit des Hubs 8 eines Rotationsmikrotoms 1. Manchmal kann das Bedürfnis bestehen, daß ein solcher Hub 8 stufenlos einstellbar ist, wenn man Gewebeproben verschiedenster Größen bearbeiten will und dabei vermeiden möchte, daß man auf zwei oder eine begrenzte Zahl verschiedener Hubgrößen beschränkt ist. Zu diesem Zweck kann man die erfindungsgemäße Vorrichtung auch derart ausgestalten, daß ein Kurbelzapfen 5 verschiedene Positionen 5' stufenlos einnehmen kann.

Ein Beispiel einer solchen Ausgestaltung besteht darin, daß man die Verstellbasis 9 in verschiedene Drehpositionen bewegen kann. Auf sehr zweckmäßige Art und Weise kann dies dadurch bewirkt werden, daß die Verstellbasis 9 ein Schneckenrad 17 ist, das durch eine Schnecke 18 gedreht werden kann. Dies hat den besonderen Vorteil, daß die Schnecke 18 eine Selbsthemmung des Schneckenrades 17 bewirkt, so daß jede beliebige Position eines Kurbelzapfens 5, 5' eingestellt werden kann, ohne daß sich eine solche Einstellung von selbst verstellen kann. Bei dieser Antriebsmechanik muß dann eine Einführung 12' für ein Verstellwerkzeug 12 derart vorgesehen sein, daß mittels des Verstellwerkzeugs 12 die Schnecke 18 gedreht werden kann. Auch in diesem Fall muß, wie oben zu Fig. 5 beschrieben, die Kurbel 4 in der entsprechenden Position mittels einer Arretiervorrichtung festgestellt werden, in der das Verstellwerkzeug 12 durch eine Einführöffnung 12" des Mikrotomgehäuses 33 derart eingeführt werden kann, daß es in die Eingriffsmöglichkeit 11' der Schnecke 18 eingreifen kann.

**Fig. 8a** zeigt ein stufenlos verstellbares Kompensationsgewicht 28, das man dann braucht, wenn man den Hub 8 - wie zu Fig. 8 beschrieben - stufenlos einstellen kann. Beispielsweise kann vorgesehen sein, daß das verstellbare Kompensationsgewicht 28 in dem Antriebsrad 7 in radialer Richtung verschiebbar angeordnet ist, so daß es in verschiedenen Entfernungen von der Kurbelwelle 6 positioniert werden kann. Günstigerweise wird dazu eine Gewindespindel 56 vorgesehen, die in dem verstellbaren Kompensationsgewicht 28, welche mit einem korrespondierenden Gewinde ausgestattet ist, drehbar gelagert ist. Diese Gewindespindel 56 kann mit einem Stellwerkzeug 37' angetrieben werden, so daß das Kompensationsgewicht 28 radial gesehen unterschiedliche Stellungen in dem Antriebsrad 7 einnehmen kann.

Man kann auch eine Stellanzeige 57 vorsehen, um diese Position von außen zu sehen. Letzteres ist dann zweckmäßig und am besten mit einer Skala ausgestattet, wenn die Mechanik gemäß Fig. 8 eine ähnliche Anzeige aufweist und es so möglich ist, einem bestimmten eingestellten Hub 8 auch eine bestimmte Einstellung des Kompensationsgewichts 28 zuzuordnen. Das verstellbare Kompensationsgewicht 28 kann mit einem fest eingebauten Kompensationsgewicht kombiniert werden, damit eine geringere Masse bewegt werden muß.

Diese Ausführungsbeispiele sind selbstverständlich nur beispielhafter Natur, man könnte zum Beispiel eine Verstellung des Kurbelzapfens 5, 5' auch dadurch bewirken daß die Kurbel 4 in ihrer Länge verstellbar ist oder es könnte auch zweckmäßig sein, die Einstellung des Kurbelzapfens 5, 5' mit einer Einstellung eines Kompensationsgewichts 28 mechanisch zu verknüpfen, so daß beide Einstellungen in simultaner Weise zueinander passend vornehmbar sind.

Selbstverständlich ist diese Einstellmöglichkeit auch für ein Rotationsmikrotom 1 mit einem elektrischen Antrieb möglich oder es könnte auch vorgesehen sein, daß die vorgenannten mechanischen Einstellungen elektrisch vorgenommen werden, beispielsweise mittels Schrittmotoren, welche zum Beispiel eine Schnecke 18 antreiben könnten und in entsprechender Weise auch die Gewindespindel 56 zur Einstellung des Kompensationsgewichts 28. Weitere Ausgestaltungsmöglichkeiten sind denkbar.

### Bezugszeichenliste

- 1: Rotationsmikrotom
- 2: Objektschlitten (vertikal geführt)
- 2', 2": Objektschlittenführung
- 3: Kurbelantrieb
- 4: Kurbel
- 5: Kurbelzapfen (1. Position)
- 5': Kurbelzapfen 2. Position
- 6: Kurbelwelle
- 7: Antriebsrad
- 8: Doppelpfeil: Hub (vertikal)
- 8': halber Hub
- 9: Verstellbasis
- 10: Betätigungsmittel für Verstellbasis
- 11: Eingriffsmöglichkeit (Verstellbasis)
- 11': Eingriffsmöglichkeit (Schnecke)
- 12: Verstellwerkzeug
- 12': Pfeil: Einführung für Verstellwerkzeug
- 12": Einführöffnung
- 13: Konus
- 14: Ringnut
- 15: Rastkerbe
- 16: Blattfeder
- 16': Rastnase
- 17: Schneckenrad
- 18: Schnecke
- 19: Arretierstab
- 19': Eingriffszapfen des Arretierstabs
- 20: Durchbrechung
- 20': Bohrung
- 21: Kurbelwellengehäuse
- 22: Eingriffsöffnung für Arretierstab
- 23: Positionsstift
- 24: Ausnehmung für Positionsstift (Eingriffsposition)
- 25: Rand
- 26: Auskragung
- 27: Feder
- 28: Kompensationsgewicht (verstellbar)
- 29: erstes Kompensationsgewicht (fest)
- 30: Kompensationsgewicht (entfernbar)
- 31: Wirkposition
- 32: Ruheposition
- 33: Mikrotomgehäuse
- 34: Öffnung für Haltestift (Haltestiftöffnung)
- 35: Haltestifte Wirkposition
- 36: Öffnung für Schubstange
- 37: Schubstange
- 37': Stellwerkzeug
- 38: Haltestifte Ruheposition
- 39: Pfeil: Verschiebeweg
- 40: Rastvorrichtung
- 41: Kugel
- 42: Feder
- 43: Ringnut (Haltestift)
- 44: Eingriffsöffnung für Schubstange
- 45, 45': Gewinde (Eingriffsöffnung und Schubstange)
- 46: Messer
- 47: Messerhalterung
- 48: Kulissenstein
- 49: Kurbelzapfeneingriff
- 50: Kulissensteinführung
- 51: Objekt
- 52: Handkurbel
- 53: Doppelpfeil: Verstellung des Kurbelzapfens
- 54: Schrauben
- 55: Bohrung
- 56: Gewindespindel
- 57: Stellanzeige

## Patentansprüche

1. Rotationsmikrotom (1) mit einer Antriebsmechanik, die eine Drehbewegung in eine Hubbewegung für das Objekt (51) umsetzt, wobei sich das Objekt (51) auf einem Objektschlitten (2) befindet, der in einer Objektschlittenführung (2', 2") vertikal geführt ist und die Antriebsmechanik die Drehbewegung in eine Linearbewegung für den Hub (8) des Objektschlittens (2) umsetzt, **dadurch gekennzeichnet, daß** die Antriebmechanik einen Kurbelantrieb (3) mit einer Kurbel (4), einem Kurbelzapfen (5, 5'), eine Kurbelwelle (6) und einem Kurbelzapfeneingriff (49) in einer Führung (50) im Objektschlitten (2) aufweist, daß Mittel zur Einstellung der Länge der Hubbewegung vorgesehen sind und daß die Mittel als Einstellmöglichkeit der Entfernung des Kurbelzapfens (5, 5') von der Mittellinie der Kurbelwelle (6) ausgebildet sind.

2. Rotationsmikrotom nach Anspruch 1,
**dadurch gekennzeichnet,**
**daß** die Einstellmöglichkeit stufenweise ausgestaltet ist.

3. Rotationsmikrotom nach Anspruch 1,
**dadurch gekennzeichnet,**
**daß** die Einstellmöglichkeit stufenlos ausgestaltet ist.

4. Rotationsmikrotom nach Anspruch 2 oder 3,
**dadurch gekennzeichnet,**
**daß** die Mittel aufweisen:
eine in der Kurbel (4) verstellbar angeordnete Verstellbasis (9) für den Kurbelzapfen (5, 5') und Betätigungsmittel (10) für diese.

5. Rotationsmikrotom nach Anspruch 4,
**dadurch gekennzeichnet,**
**daß** die Betätigungsmittel (10) in einer Eingriffsmöglichkeit (11) auf der Verstellbasis (9) bestehen, die auf der dem Kurbelzapfen (5, 5') gegenüberliegenden Seite angeordnet ist, und einem Verstellwerkzeug (12) zum Eingriff in diese.

6. Rotationsmikrotom nach Anspruch 5,
**dadurch gekennzeichnet,**
**daß** die Verstellbarkeit der Verstellbasis (9) als Rotationsbewegung ausgebildet ist und der Kurbelzapfen (5, 5) auf der Verstellbasis (9) exzentrisch angeordnet ist.

7. Rotationsmikrotom nach Anspruch 6,
**dadurch gekennzeichnet,**
**daß** die Verstellbasis (9) mit einem Konus (13) und die Kurbel (4) mit einer korrespondierenden Aufnahme ausgebildet sind.

8. Rotationsmikrotom nach Anspruch 6 oder 7,
**dadurch gekennzeichnet,**
**daß** die Verstellbasis (9) für die Verankerung in der Kurbel (4) eine Ringnut (14) aufweist und an der Kurbel (4) befestigbare Blattfedern (15) zum Eingriff in diese Ringnut (14) angeordnet sind.

9. Rotationsmikrotom nach Anspruch 8,
**dadurch gekennzeichnet,**
**daß** die Ringnut (14) eine oder mehrere Rastkerben (15) aufweist und die Blattfedern (16) mit einer Rastnase (16') ausgestaltet sind, wobei die Blattfedern (16) auf der Kurbel (4) so angeordnet sind, daß deren Rasteingriffe einer definierten Hubeinstellung entsprechen.

10. Rotationsmikrotom nach Anspruch 9,
**dadurch gekennzeichnet,**
**daß** zwei Rastkerben (15) in 180°-Position zueinander vorgesehen sind und zwei Blattfedern (16) mit ihren Rastnasen (16') zum Eingriff in diese angeordnet sind.

11. Rotationsmikrotom nach Anspruch 3 und 4,
**dadurch gekennzeichnet,**
**daß** die Verstellbasis (9) als Schneckenrad (17) ausgebildet ist, auf dem der Kurbelzapfen (5, 5') exzentrisch angeordnet ist, und daß als Betätigungsmittel (10) eine Eingriffsmöglichkeit (11') für ein Verstellwerkzeug (12) in einer mit dem Schneckenrad (17) zusammenwirkenden Schnecke (18) zur Drehung derselben vorgesehen ist

12. Rotationsmikrotom nach einem der Ansprüche 1 bis 11,
**dadurch gekennzeichnet,**
**daß** Mittel zur Festlegung und Freigabe der Kurbelwelle (6) vorgesehen sind, mittels derer die Kurbelwelle (6) bzw. die Kurbel (4) so arretiert werden kann, daß das Verstellwerkzeug (12) mit der Eingriffsmöglichkeit (11, 11') auf der Verstellbasis (9) oder der Schnecke (18) in Eingriff kommen kann, wobei der Eingriff lösbar ausgestaltet ist.

13. Rotationsmikrotom nach Anspruch 12,
**dadurch gekennzeichnet,**
**daß** die Mittel aufweisen:
- einen Arretierstab (19), der durch eine Durchbrechung (20) in einem Kurbelwellengehäuse (21) zur Kurbelwelle (6) führbar ist, um diese festzulegen,
- eine seitliche Eingriffsöffnung (22) für den Arretierstab (19) in der Kurbelwelle (6), in die der Arretierstab (19) eingreifen kann, wenn sich die Kurbelwelle (6) in der Position für den Eingriff des Verstellwerkzeugs (12) befindet.

14. Rotationsmikrotom nach Anspruch 13,
**dadurch gekennzeichnet,**
**daß** die Mittel für die Festlegung und Freigabe der Kurbelwelle (6) ferner aufweisen:
- einen Positionsstift (23), der seitlich auf dem Arretierstab (19) angeordnet ist,
- eine verschiebbare und drehbare Lagerung des Arretierstabs (19) in einer als Bohrung (20') ausgestalteten Durchbrechung (20),
- eine Ausnehmung (24) für den Positionsstift (23) im Rand (25) der Bohrung (20'), wobei der Rand (25) den Arretierstab (19) mittels des Positionsstifts (23) in der Freigabeposition hält und beim Eingriff des Positionsstifts (23) in die Ausnehmung (24) der Arretierstab (19) in die Eingriffsöffnung (22) schiebbar ist,
- eine ringförmige Auskragung (26) auf dem Arretierstab (19),
- eine den Arretierstab (19) umgebende Feder (27), die so angeordnet ist, daß die Kraft der Feder (27) auf die Auskragung (26) des Arretierstabs (19) wirkt und diesen damit in die Eingriffsöffnung (22) der Kurbelwelle (6) einrückt.

15. Rotationsmikrotom nach einem der Ansprüche 1 bis 14,
**dadurch gekennzeichnet,**
**daß** Kompensationsmittel (28, 29, 30) zum Ausgleich der Unwucht der Antriebsmechanik vorgesehen sind.

16. Rotationsmikrotom nach Anspruch 15,
**dadurch gekennzeichnet,**
**daß** die Kompensationsmittel (28, 29, 30) im Antriebsrad (7) vorgesehen sind.

17. Rotationsmikrotom nach Anspruch 16,
**dadurch gekennzeichnet,**
**daß** die Kompensationsmittel (28, 29, 30) verstellbar ausgestaltet sind.

18. Rotationsmikrotom nach Anspruch 17,
**dadurch gekennzeichnet,**
**daß** die verstellbaren Kompensationsmittel als erstes verstellbares Kompensationsgewicht (28) kombiniert mit einem zweiten, fest angeordneten Kompensationsgewicht (29) ausgestaltet sind.

19. Rotationsmikrotom nach einem der Ansprüche 17 oder 18,
**dadurch gekennzeichnet,**
**daß** die Verstellbarkeit durch Mittel zur radialen Positionsänderung des verstellbaren Kompensationsgewichts (28) im Verhältnis zur Kurbelwelle (6) ausgebildet sind.

20. Rotationsmikrotom nach Anspruch 17,
**dadurch gekennzeichnet,**
**daß** ein erstes Kompensationsgewicht (29) fest im Antriebsrad (7) angeordnet ist und das zweite Kompensationsgewicht (30) entfernbac im Antriebsrad (7) angeordnet ist.

21. Rotationsmikrotom nach Anspruch 20,
**dadurch gekennzeichnet,**
**daß** die Entfernung dadurch erzielbar ist, daß das zweite Kompensationsgewicht (30) aus einer Wirkposition (31) im Antriebsrad (7) in eine Ruheposition (32) im Mikrotomgehäuse (33) verschiebbar und von dieser in die Wirkposition (31) zurückholbar ausgestaltet ist.

22. Rotationsmikrotom nach Anspruch 21,
**dadurch gekennzeichnet,**
**daß** das zweite Kompensationsgewicht (30) mindestens zwei durchgehende Öffnungen (34) für je einen Haltestift (35) im Antriebsrad (7) aufweist und eine Öffnung (36) für eine Schubstange (37), mittels derer das zweite Kompensationsgewicht (30) aus der Wirkposition (31) in die Ruheposition (32) verschoben werden kann.

23. Rotationsmikrotom nach Anspruch 22,
**dadurch gekennzeichnet,**
**daß** die Ruheposition (32) durch zwei korrespondierende Haltestifte (38) innerhalb des Mikrotomgehäuses (33) gebildet ist, und zwar derart, daß das Verschieben (Pfeil 39) des zweiten Kompensationsgewichts (30) von den Haltestiften (35) in der Wirkposition (31) auf die Haltestifte (38) in der Ruheposition (32) gleitend erfolgen kann.

24. Rotationsmikrotom nach Anspruch 23,
**dadurch gekennzeichnet,**
**daß** das zweite Kompensationsgewicht (30) in seiner Wirkposition (31) im Antriebsrad (7) durch eine Rastvorrichtung (40) gehalten wird.

25. Rotationsmikrotom nach Anspruch 24,
**dadurch gekennzeichnet,**
**daß** die Rastvorrichtung (40) darin besteht, daß das zweite Kompensationsgewicht (30) im Verlauf mindestens einer Haltestiftöffnung (34) mindestens ein Kugeldruckstück, bestehend aus Kugel (41) und Feder (42), aufweist und die Haltestifte (35) im Antriebsrad (7) mit einer Ringnut (43) ausgestattet sind, in die die Kugel (41) bei der gewünschten Wirkposition (31) des zweiten Kompensationsgewichts (30) eingreift.

26. Rotationsmikrotom nach einem der Ansprüche 22 bis 25,
**dadurch gekennzeichnet,**
**daß** die Eingriffsöffnung (44) für die Schubstange (37) und die Schubstange (37) korrespondierende Mittel aufweisen, mittels derer die Schubstange (37) im zweiten Kompensationsgewicht (30) fixiert werden kann.

27. Rotationsmikrotom nach Anspruch 26,
**dadurch gekennzeichnet,**
**daß** die korrespondierenden Mittel aus Gewinden (45, 45') bestehen, die in der Eingriffsöffnung (44) für die Schubstange (37) und am vorderen Ende der Schubstange (37) angeordnet sind.

## Claims

1. A rotary microtome (1) with a drive mechanism that converts a rotary movement into a linear movement of an object (51), wherein the object (51) is disposed on an object slide (2) being vertically guided in an object slide guide (2' 2") and the drive mechanism converts a rotary movement into a linear movement for the stroke (8) of said object slide (2), **characterized in that** said drive mechanism has a crank drive (3) with a crank (4), a crankpin (5, 5'), a crankshaft (6) and a crankpin engagement (49) in a guide (50) in said object slide (2), that means for adjusting the length of the stroke are provided and that said means are provided for setting a distance of said crankpin (5, 5') from a centreline of said crankshaft (6).

2. The rotary microtome of claim 1, **characterized in that** said distance can be set in steps.

3. The rotary microtome of claim 1, **characterized in that** said distance can be set continuously.

4. The rotary microtome of claim 2 or 3, **characterized in that** said distance setting means comprise:
an adjustment base (9) being disposed in said crank (4), and cooperating with said crankpin (5, 5') and further comprising operating means (10) for aid adjustment base (9).

5. The rotary microtome of claim 4, **characterized in that** said operating means (10) comprise an engagement facility (11) on said adjustment base (9) that is disposed on a side opposite said crankpin (5, 5') and an adjustment tool (12) for engagement therein.

6. The rotary microtome of claim 5, **characterized in that** said adjustment base (9) is adjusted by rotary movement and said crankpin (5,5') is disposed eccentrically on said adjustment base (9).

7. The rotary of claim 6, **characterized in that** said adjustment base (9) has a cone (13) and that said crank (4) has a corresponding recess.

8. The rotary microtome of claim 6 or 7, **characterized in that** said adjustment base (9) is anchored in said crank (4) via an annular slot (14) and that flat springs (16) are disposed on said crank (4) for engagement in said annular slot (14).

9. The rotary microtome of claim 8, **characterized in that** said annular slot (14) has one or more latching notches (15) and that said flat springs (16) are equipped with a latching lug (16'), wherein said flat springs (16) are disposed on said crank (4) such that their latching notch engagements correspond to a defined setting of a stroke length.

10. The rotary of claim 9, **characterized in that** two latching notches (15) are disposed at a 180°-position with respect to one another and that two flat springs (16) are disposed with their latching lugs (16') for engagement in said latching notches.

11. The rotary of claim 3 or 4, **characterized in that** said adjustment base (9) is constituted as a wormwheel (17) on which said crankpin (5, 5') is eccentrically disposed and that said operating means (10) comprise an engagement facility (11') for an adjustment tool (12) in a worm (18) that interacts with said wormwheel (17) for rotation thereof.

12. The rotary microtome according to one of the claims 1 to 11, **characterized in that** means are provided for securing and releasing said crankshaft (6) such that said crankshaft (6) or said crank (4) are latched to permit said adjustment tool (12) to engage with said engagement facility (11, 11') on said adjustment base (9) or on said worm (18) in a releasable manner.

13. The rotary microtome of claim 12, **characterized in that** said means comprise:
- a latching rod (19) that can be guided through an opening (20) in a crankshaft housing (21) to engage and secure said crankshaft (6),
- a side engagement opening (22) for said latching rod (19) defined in said crankshaft (6), wherein said latching rod (19) engages said engagement opening (22) when said crankshaft (6) is disposed in a position for engagement of said adjustment tool (12).

14. The rotary microtome of claim 13, **characterized in that** said means for securing and releasing said crankshaft (6) further comprise:
- a position pin (23) that is disposed laterally on said latching rod (19),
- a shiftable and rotatable bearing of said latching rod (19) in an opening (20) constituted as a drill-hole (20'),
- a recess (24) for said position pin (23) in an edge (25) of said drill-hole (20'), wherein said edge (25) holds said latching rod (19) in a release position by means of said position pin (23) and, during engagement of said position pin (23) in said recess (24), said latching rod (19) can be pushed into said engagement opening (22),
- an annular collar (26) disposed on said latching rod (19)
- a spring (27) surrounding said latching rod (19) and being disposed such that the force of said spring (27) acts on to said collar (26) of said latching rod (19) urging said latching rod (19) into said engagement opening (22) of said crankshaft (6).

15. The rotary microtome according to one of the claims 1 to 14, **characterized in that** balancing means (28, 29, 30) are provided to compensate for imbalance of said drive mechanism.

16. The rotary microtome of claim 15, **characterized in that** said balancing means (28, 29, 30) are disposed in said drive wheel (7).

17. The rotary microtome of claim 16, **characterized in that** said balancing means (28, 29, 30) are adjustable.

18. The rotary microtome of claim 17, **characterized in that** said adjustable balancing means comprise a first, adjustable balancing weight (28) and a second permanently positioned balancing weight (29).

19. The rotary microtome of claim 17 or 18, **characterized in that** adjustability is effected by means for changing a radial position of said adjustable balancing weight (28) with respect to said crankshaft (6).

20. The rotary microtome of claim 17, **characterized in that** a first balancing weight (29) is disposed permanently in said drive wheel (7) and said second balancing weight (30) is disposed in said drive wheel (7) such that it can be removed.

21. The rotary microtome of claim 20, **characterized in that** removal of said second balancing weight (30) is effected by shifting said second balancing weight (30) from an active position (31) in said drive wheel (7) into an idle position (32) in said microtome housing (33), wherein said second balancing weight (30) can be returned from said idle position (32) to said active position (31).

22. The rotary microtome of claim 21, **characterized in that** said second balancing weight (30) has at least two through-holes (34), one for each of two etaining pins (35) disposed in said drive wheel (7), and an opening (36) for a push rod (37), wherein said push rod (37) displaces said second balancing weight (30) from said active position (31) into said idle position (32).

23. The rotary microtome of claim 22, **characterized in that** said idle position (32) is defined by two idle retaining pins (38) within said microtome housing (33) such that said shifting (arrow 39) of said second balancing weight (30) is effected by sliding from said retaining pins (35) in said active position (31) to said etaining pins (38) in said idle position (32).

24. The rotary microtome of claim 23, **characterized in that** said second balancing weight (30) is held in said active position (31) in said drive wheel (7) by a latching device (40).

25. The rotary microtome of claim 24, **characterized in that** said latching device (40) comprises at least one ball thrust element disposed in said second balancing weight (30) proximate at least one retaining pin opening (34), said ball thrust element comprising a ball (41) and spring (42), wherein said retaining pins (35) in said drive wheel (7) has an annular slot (43) in which said ball (41) engages at a desired active position (31) of said second balancing weight (30).

26. The rotary microtome of claim 22 to 25, **characterized in that** said engagement opening (44) for said push rod (37) and said push rod (37) comprise mating elements by which said push rod (37) can be secured in said second balancing weight (30).

27. The rotary microtome of claim 26, **characterized in that** said mating elements comprise threads (45, 45') being disposed in said engagement opening (44) for said push rod (37) and on an front end of said push rod (37).

## Revendications

1. Microtome à rotation (1) doté d'un mécanisme d'entraînement transformant un mouvement de rotation en un mouvement de levage pour l'objet (51), l'objet (51) se trouvant sur un coulisseau d'objet (2) guidé verticalement dans un guide-coulisseau d'objet (2', 2") et le mécanisme d'entraînement transformant le mouvement de rotation en un mouvement linéaire pour le levage (8) du coulisseau d'objet (2), **caractérisé en ce que** le mécanisme d'entraînement comporte un entraînement de vilebrequin (3) doté d'un vilebrequin (4), d'un tenon de vilebrequin (5, 5'), d'un arbre de vilebrequin (6) et d'un engrènement de tenon de vilebrequin (49) placé dans un guide (50) prévu dans le coulisseau d'objet (2), que des moyens de réglage de la longueur du mouvement de levage sont prévus et que les moyens prennent la forme d'une possibilité de réglage de l'éloignement du tenon de vilebrequin (5, 5') par rapport à la ligne centrale de l'arbre de vilebrequin (6).

2. Microtome à rotation selon la revendication 1, **caractérisé en ce que** la possibilité de réglage prend une forme graduelle.

3. Microtome à rotation selon la revendication 1, **caractérisé en ce que** la possibilité de réglage prend une forme continue.

4. Microtome à rotation selon la revendication 2 ou 3, **caractérisé en ce que** les moyens comportent une base de réglage (9) prévue pour le tenon de vilebrequin (5, 5') et disposée de façon réglable dans le vilebrequin (4) ainsi que des moyens d'actionnement (10) de ceux-ci.

5. Microtome à rotation selon la revendication 4, **caractérisé en ce que** les moyens d'actionnement (10) consistent en une possibilité d'engrènement (11) sur la base de réglage (9) disposée sur le côté opposé au tenon de vilebrequin (5, 5') ainsi qu'en un outil de réglage (12) servant à l'engrènement dans celle-ci.

6. Microtome à rotation selon la revendication 5, **caractérisé en ce que** le caractère réglable de la base de réglage (9) prend la forme d'un mouvement de rotation et que le tenon de vilebrequin (5, 5) est disposé de façon excentrée sur la base de réglage (9).

7. Microtome à rotation selon la revendication 6, **caractérisé en ce que** la base de réglage (9) est réalisée avec un cône (13) et que le vilebrequin (4) est réalisé avec un logement correspondant.

8. Microtome à rotation selon la revendication 6 ou 7, **caractérisé en ce que** la base de réglage (9) comporte une rainure annulaire (14) pour l'ancrage dans le vilebrequin (4) et que des ressorts à lames (15) pouvant être fixés au vilebrequin (4) sont disposés dans cette rainure annulaire (14) pour réaliser l'engrènement.

9. Microtome à rotation selon la revendication 8, **caractérisé en ce que** la rainure annulaire (14) comporte une ou plusieurs encoches d'encliquetage (15) et que les ressorts à lames (16) sont configurés avec un bec d'encliquetage (16'), les ressorts à lames (16) étant disposés de telle sorte sur le vilebrequin (4) que leurs engrènements d'encliquetage correspondent à un réglage de levage défini.

10. Microtome à rotation selon la revendication 9, **caractérisé en ce que** deux encoches d'encliquetage (15) sont prévues selon une position de 180° l'une par rapport à l'autre et que deux ressorts à lames (16) sont disposés dans celles-ci avec leurs becs d'encliquetage (16') pour réaliser l'engrènement.

11. Microtome à rotation selon la revendication 3 et 4, **caractérisé en ce que** la base de réglage (9) prend la forme d'une roue hélicoïdale (17) sur laquelle le tenon de vilebrequin (5, 5') est disposé de façon excentrée et que les moyens d'actionnement (10) comportent une possibilité d'engrènement (11') pour un outil de réglage (12) prévue dans un colimaçon (18) entrant en interaction avec la roue hélicoïdale (17) pour la faire tourner.

12. Microtome à rotation selon l'une quelconque des revendications 1 à 11, **caractérisé en ce que** des moyens de fixation et de libération de l'arbre de vilebrequin (6) sont prévus à l'aide desquels l'arbre de vilebrequin (6) et/ou le vilebrequin (4) peuvent être arrêtés de telle sorte que l'outil de réglage (12) peut s'engrener avec la possibilité d'engrènement (11, 11') sur la base de réglage (9) ou le colimaçon (18), l'engrènement étant configuré de façon amovible.

13. Microtome à rotation selon la revendication 12, **caractérisé en ce que** les moyens comportent :
- une tige d'arrêt (19) pouvant être guidée à travers un passage (20) pratiqué dans un carter d'arbre de vilebrequin (21), jusqu'à l'arbre de vilebrequin (6), pour le fixer ;
- une ouverture d'engrènement latérale (22) prévue pour la tige d'arrêt (19) dans l'arbre de vilebrequin (6) dans laquelle la tige d'arrêt (19) peut s'engrener lorsque l'arbre de vilebrequin (6) se trouve dans la position d'engrènement de l'outil de réglage (12).

14. Microtome à rotation selon la revendication 13, **caractérisé en ce que** les moyens de fixation et de libération de l'arbre de vilebrequin (6) comportent en outre :
- une tige de positionnement (23) disposée en côté sur la tige d'arrêt (19) ;
- un palier mobile et pivotable de la tige d'arrêt (19) placé dans un passage (20) prenant la forme d'un alésage (20') ;
- un évidement (24) pour la tige de positionnement (23) réalisé au bord (25) de l'alésage (20'), le bord (25) maintenant la tige d'arrêt (19) dans la position de libération à l'aide de la tige de positionnement (23) et la tige d'arrêt (19) pouvant être coulissée dans l'ouverture d'engrènement (22) lors de l'engrènement de la tige de positionnement (23) dans l'évidement (24) ;
- un porte-à-faux (26) de forme annulaire prévu sur la tige d'arrêt (19) ;
- un ressort (27) entourant la tige d'arrêt (19) et disposé de telle sorte que la force du ressort (27) agit sur le porte-à-faux (26) de la tige d'arrêt (19) et insère ainsi celle-ci dans l'ouverture d'engrènement (22) de l'arbre de vilebrequin (6).

15. Microtome à rotation selon l'une quelconque des revendications 1 à 14, **caractérisé en ce que** des moyens de compensation (28, 29, 30) sont prévus pour compenser le balourd du mécanisme d'entraînement.

16. Microtome à rotation selon la revendication 15, **caractérisé en ce que** les moyens de compensation (28, 29, 30) sont prévus dans la roue d'entraînement (7).

17. Microtome à rotation selon la revendication 16, **caractérisé en ce que** les moyens de compensation (28, 29, 30) sont conçus de façon réglable.

18. Microtome à rotation selon la revendication 17, **caractérisé en ce que** les moyens de compensation réglables prennent la forme d'un premier poids de compensation réglable (28) combiné à un deuxième poids de compensation (29) disposé fixement.

19. Microtome à rotation selon l'une quelconque des revendications 17 ou 18, **caractérisé en ce que** le caractère réglable prend la forme de moyens de changement de position radiale du poids de compensation (28) réglable par rapport à l'arbre de vilebrequin (6).

20. Microtome à rotation selon la revendication 17, **caractérisé en ce qu'**un premier poids de compensation (29) est disposé fixement dans la roue d'entraînement (7) et que le deuxième poids de compensation (30) est disposé de façon à pouvoir être éloigné dans la roue d'entraînement (7).

21. Microtome à rotation selon la revendication 20, **caractérisé en ce que** l'éloignement peut être atteint en déplaçant le deuxième poids de compensation (30) d'une position active (31) se trouvant dans la roue d'entraînement (7) dans une position de repos (32) se trouvant dans le carter de microtome (33) et est configuré de façon à pouvoir être ramené de celle-ci dans la position active (31).

22. Microtome à rotation selon la revendication 21, **caractérisé en ce que** le deuxième poids de compensation (30) comporte au moins deux ouvertures (34) traversantes respectivement prévues pour une tige de blocage (35) placée dans la roue d'entraînement (7) et une ouverture (36) prévue pour une tringle de poussée (37) à l'aide de laquelle le deuxième poids de compensation (30) peut être poussé de la position active (31) dans la position de repos (32).

23. Microtome à rotation selon la revendication 22, **caractérisé en ce que** la position de repos (32) est formée par deux tiges de blocage (38) correspondantes placées à l'intérieur du carter de microtome (33) et notamment de telle sorte que le coulissement (flèche 39) du deuxième poids de compensation (30) peut se produire par glissement des tiges de blocage (35) se trouvant dans la position active (31) sur les tiges de blocage (38) se trouvant dans la position de repos (32).

24. Microtome à rotation selon la revendication 23, **caractérisé en ce que** le deuxième poids de compensation (30) est maintenu dans sa position active (31) placée dans la roue d'entraînement (7) par un dispositif d'encliquetage (40).

25. Microtome à rotation selon la revendication 24, **caractérisé en ce que** le dispositif d'encliquetage (40) consiste **en ce que** le deuxième poids de compensation (30) comporte dans la trajectoire d'au moins une ouverture de tige de blocage (34) au moins une partie de compression sphérique composée d'une sphère (41) et d'un ressort (42) et que les tiges de blocage (35) placées dans la roue d'entraînement (7) sont dotées d'une rainure annulaire (43) dans laquelle la sphère (41) s'engrène dans la position active (31) souhaitée du deuxième poids de compensation (30).

26. Microtome à rotation selon l'une quelconque des revendications 22 à 25, **caractérisé en ce que** l'ouverture d'engrènement (44) prévue pour la tringle de poussée (37) et la tringle de poussée (37) comportent des moyens correspondants à l'aide desquels la tringle de poussée (37) peut être fixée dans le deuxième poids de compensation (30).

27. Microtome à rotation selon la revendication 26, **caractérisé en ce que** les moyens correspondants prennent la forme de filets (45, 45') disposés dans l'ouverture d'engrènement (44) prévue pour la tringle de poussée (37) et sont disposés au niveau de l'extrémité avant de la tringle de poussée (37).
